# EUROPEAN PATENT SPECIFICATION

(11) **EP 2 757 062 B1**
(45) Date of publication and mention of the grant of the patent: **22.03.2017**
(21) Application number: 12832445.6
(22) Date of filing: 13.09.2012
(51) Int. Cl.: B65H 49/28, B29C 70/16, B65H 49/16, B65H 57/06, B65H 67/048, B65H 57/04, B29C 31/04, B29C 53/60, B29C 53/80, B65H 49/32, B65H 67/02

(54) **FIBER BUNDLE SUPPLY DEVICE**
FASERBÜNDELZUFUHRVORRICHTUNG
DISPOSITIF D'APPROVISIONNEMENT EN FAISCEAU DE FIBRES

(30) Priority: 16.09.2011 JP 2011203683
(43) Date of publication of application: 23.07.2014
(73) Proprietor: Murata Machinery, Ltd., Kyoto-shi, Kyoto 601-8326 (JP); Toyota Jidosha Kabushiki Kaisha, Toyota-shi, Aichi 471-8571 (JP)
(72) Inventor: TANIGAWA Motohiro, Kyoto-shi, Kyoto 612-8686 (JP); NAKAMURA Daigoro, Kyoto-shi, Kyoto 612-8686 (JP); HATTA Ken, Toyota-shi, Aichi 471-8572 (JP)
(74) Representative: Weickmann & Weickmann PartmbB
(86) International application number: PCT/JP2012/073490
(87) International publication number: WO 2013/039157

(56) References cited:
- DE-A1- 10 029 492
- JP-A- H0 656 344
- JP-A- H01 281 261
- JP-A- H04 241 140
- JP-A- H09 176 942
- JP-A- 2005 154 104
- JP-A- 2006 016 732
- JP-A- 2009 155 066
- JP-A- 2010 023 481
- JP-U- H0 333 863
- US-A- 4 887 649

## Description

### Technical Field

The present invention relates to a technique of a fiber bundle supply device.

### Background Art

Conventionally, a filament winding device which winds fiber bundles around the outer periphery surface of a liner has been known. The filament winding device is provided with a fiber bundle supply part, and a plurality of bobbins around which the fiber bundle is wound are arranged in the fiber bundle supply part (for example, see Patent Literature 1). With regard to the filament winding device, the fiber bundle is unwound from each bobbin arranged in the fiber bundle supply part, and the said fiber bundles are wound around the outer periphery surface of the liner.

However, with regard to the conventional filament winding device, when one bobbin arranged in the fiber bundle supply part becomes empty, there is a need to stop the fiber bundle winding operation and change the bobbin. Accordingly, there is a problem that the fiber bundle winding operation is interrupted frequently, and thus productivity is reduced.

### Prior Art Documents

### Patent Literature

Patent Literature 1: the Japanese Patent Laid Open Gazette 2010-23481

A fiber bundle supply device according to the preamble of claim 1 is known from US 4 887 649 A and JP 2006 016 732 A.

### SUMMARY OF THE INVENTION

### Problems to Be Solved by the Invention

The present invention is made in order to solve the above-described problems. An object of the present invention is to provide a technique in which if a fiber bundle wound around one bobbin has been unwound and little remains, unwinding of a fiber bundle wound around the other bobbin is started, whereby the fiber bundle is continuously supplied.

### Means for Solving the Problems

The above object is achieved by a fiber bundle device according to claim 1.

A first aspect of the present invention is a fiber bundle supply device including: plural bobbin holder shafts each of which supports a bobbin around which a fiber bundle is wound; and a turntable on which the bobbin holder shafts are arranged in a concentric pattern and which rotates around the central axis of said concentric circle. The bobbin holder shafts are configured from at least a first bobbin holder shaft which supports a first bobbin, and a second bobbin holder shaft which supports a second bobbin. If the fiber bundle wound around the first bobbin has been unwound and little remains, by rotating the turntable and splicing the fiber bundle of the first bobbin and the fiber bundle of the second bobbin, unwinding of the fiber bundle wound around the second bobbin is started.

A second aspect of the present invention is the fiber bundle supply device according to the first aspect which includes a first fiber bundle guide and a second fiber bundle guide which are installed on the turntable and which rotate with the turntable. When the turntable starts rotation, the first fiber bundle guide guides the fiber bundle unwound from the first bobbin to be restricted in a prescribed trajectory. And when the rotation of the turntable is terminated, the second fiber bundle guide superposes the end portion of the fiber bundle wound around the second bobbin on the fiber bundle unwound from the first bobbin.

A third aspect of the present invention is the fiber bundle supply device according to the first or the second aspect which includes a splicing device which splices the fiber bundle of the first bobbin and the fiber bundle of the second bobbin together. The splicing device splices the overlapped portion of the fiber bundle of the first bobbin and the fiber bundle of the second bobbin.

A fourth aspect of the present invention is the fiber bundle supply device according to any one of the first to the third aspect which includes a cutter device which cuts the fiber bundle unwound from the first bobbin. The cutter device cuts the fiber bundle unwound from the first bobbin such that necessary and sufficient bonding strength is obtained when all of the overlapped portion of the fiber bundle is spliced.

### Effects of the Invention

The present invention exerts effects described below.

According to the first aspect, if the fiber bundle wound around a first bobbin has been unwound and little remains, unwinding of the fiber bundle wound around a second bobbin is started, whereby the fiber bundle is continuously supplied. As such, the fiber bundle can be continuously supplied.

According to the second aspect, the end portion of the fiber bundle wound around the second bobbin can be overlapped with the fiber bundle unwound from the first bobbin and restricted in the prescribed trajectory. As such, the fiber bundle of the first bobbin can be spliced with the fiber bundle of the second bobbin.

According to the third aspect, the overlapped portion of the fiber bundle of the first bobbin and the fiber bundle of the second bobbin can be spliced. As such, the fiber bundle of the first bobbin can be surely spliced with the fiber bundle of the second bobbin.

According to the fourth aspect, necessary and sufficient bonding strength can be obtained with respect to the splicing portion of the fiber bundle of the first bobbin and the fiber bundle of the second bobbin. As such, required bonding strength can be secured for the splicing portion, and time required for splicing can be shortened.

### BRIEF DESCRIPTION OF THE DRAWINGS

[FIG. 1] It is a figure illustrating an overall configuration of a filament winding device 100.
[FIG. 2] It is a figure illustrating a configuration of a fiber bundle supply device 32.
[FIG. 3] It is a figure illustrating a state in which a fiber bundle F wound around a first bobbin B1 is unwound.
[Fig. 4] It is a figure illustrating a state in which rotation of a turntable 323 is started.
[Fig. 5] It is a figure illustrating a state in which rotation of the turntable 323 is terminated.
[Fig. 6] It is a figure illustrating a state in which an overlapped portion of the fiber bundle F is spliced by a splicing device 326.
[Fig. 7] It is a figure illustrating a state in which the fiber bundle F unwound from the first bobbin B1 is cut by a cutter device 327.
[Fig. 8] It is a figure illustrating a state in which rotation of the turntable 323 to the reverse direction is terminated.
[Fig. 9] It is a figure illustrating a state in which the fiber bundle F wound around a second bobbin B2 is unwound.
[Fig. 10] It is a figure illustrating a state in which a new bobbin B is fitted to a first bobbin holder shaft 321.
[Fig. 11] It is a figure illustrating a state in which the fiber bundle F is restricted in a prescribed trajectory.
[Fig. 12] It is a figure illustrating a state in which the fiber bundle F of the first bobbin B1 is superposed on the fiber bundle F of the second bobbin B2.

### DESCRIPTION OF NOTATIONS

- 1: liner
- 10: liner transfer part
- 11: pedestal
- 12: liner support frame
- 13: rotational shaft
- 20: helical winding part
- 21: pedestal
- 22: helical head
- 23: guide
- 30: fiber bundle supply part
- 31: rack
- 32: fiber bundle supply device
- 321: first bobbin holder shaft
- 322: second bobbin holder shaft
- 323: turntable
- 324: first fiber bundle guide
- 325: second fiber bundle guide
- B: bobbin
- B1: first bobbin
- B2: second bobbin
- C: central axis
- F: fiber bundle
- P1: unwinding position
- P2: standby position

### DESCRIPTION OF EMBODIMENTS

Next, an explanation will be given of embodiments of the present invention.

A fiber bundle supply device 32 according to the embodiment of the present invention is included in a fiber bundle supply part 30 which configures a filament winding device 100. Therefore, first of all, a brief explanation will be given of an overall configuration of the filament winding device 100 (Hereinafter referred to as "FW device 100").

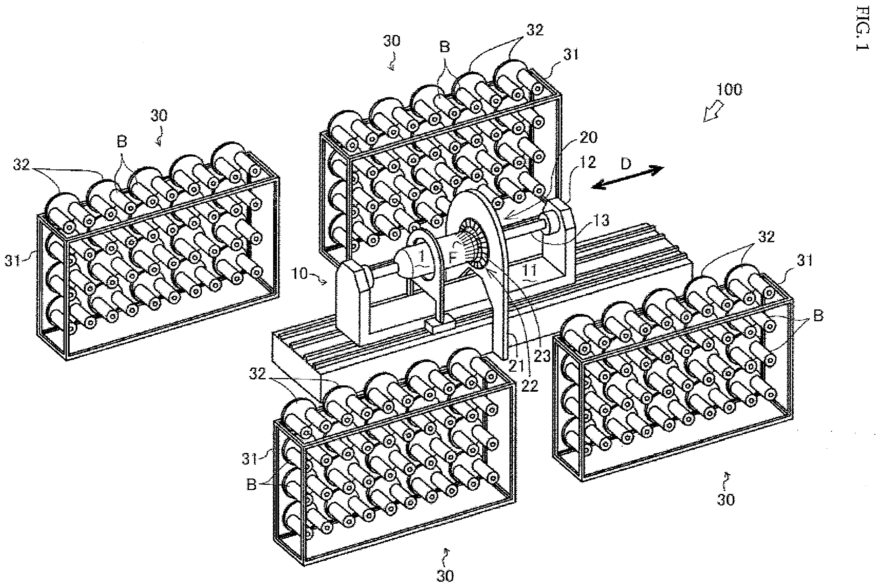

FIG. 1 illustrates the overall configuration of the FW device 100. An arrow D in the drawing indicates a transfer direction of a liner 1. The direction in parallel to the transfer direction of the liner 1 is regarded as the longitudinal direction of the FW device 100, and one direction of transferring the liner 1 and other direction opposite thereto are respectively defined as the front side and the rear side. The FW device 100 reciprocates the liner 1 in the longitudinal direction, whereby the front side and the rear side is defined depending on the transfer direction of the liner 1.

The FW device 100 winds a fiber bundle F around the outer periphery surface of the liner 1. The FW device 100 mainly includes a liner transfer part 10, a helical winding part 20, and the fiber bundle supply part 30.

The liner transfer part 10 transfers the liner 1 while rotating it. In particular, the liner 1 is rotated about the longitudinal direction of the FW device 100 as a center axis, and is transferred in the longitudinal direction of the FW device 100 by the liner transfer part 10. The liner transfer part 10 mainly includes a pedestal 11, liner support frames 12, and a rotational shaft 13.

The pedestal 11 is placed on a pair of rails extending in the longitudinal direction of the FW device 100. The pedestal 11 is provided with the pair of liner support frames 12 and the rotational shaft 13. The liner 1 is attached to the rotational shaft 13 and is rotated one direction via a power mechanism (not shown).

Because of this configuration, it is possible that the liner 1 is rotated about the longitudinal direction of the FW device 100 as a center axis, and is transferred in the longitudinal direction of the FW device 100 by the liner transfer part 10.

The helical winding part 20 winds the fiber bundles F around the outer periphery surface of the liner 1. In particular, the helical winding part 20 performs so-called helical winding in which the winding angle of the fiber bundle F is set to be a prescribed value relative to the longitudinal direction of the FW device 100. The helical winding part 20 mainly includes a pedestal 21 and a helical head 22.

The pedestal 21 is provided with the helical head 22. The helical head 22 is provided with a plurality of guides 23 each of which guides the fiber bundle F. The fiber bundle F guided by each guide 23 is wound around the outer periphery surface of the liner 1 passing through while rotating.

Because of this configuration, it is possible that the helical winding part 20 performs so-called helical winding, where the winding angle of the fiber bundle F is set to be the prescribed value relative to the longitudinal direction of the FW device 100.

The fiber bundle supply part 30 supplies the fiber bundles F to the helical winding part. In particular, the fiber bundle supply part 30 supplies the fiber bundle F to each guide 23 of the helical head 22 included in the helical winding part 20. The fiber bundle supply part 30 mainly includes a rack 31 and the fiber bundle supply devices 32.

The rack 31 is provided with the plurality of fiber bundle supply devices 32. The fiber bundle supply device 32 supports bobbins B around which the fiber bundle F is wound. And the fiber bundle F wound around each bobbin B is supplied to the corresponding respective guide 23 through a guide member (not shown).

Because of this configuration, it is possible that the fiber bundle F is fed to each guide 23 of the helical head 22 included in the helical winding part 20 by the fiber bundle supply part 30.

Next, a detailed explanation will be given of the configuration of the fiber bundle supply device 32.

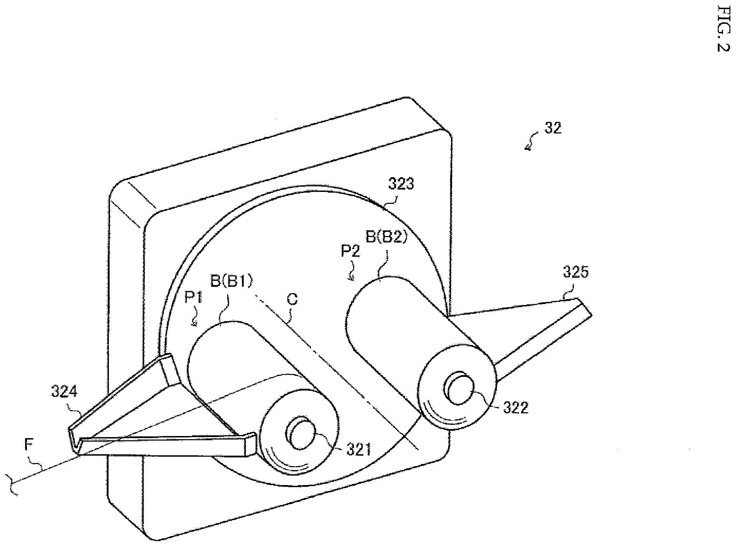

FIG. 2 illustrates the configuration of the fiber bundle supply device 32. Here, explanation will be given by using the case of two-shaft type fiber bundle supply device which has two bobbin holder shafts 321, 322 each of which supports the bobbin B. However, even in the case of three-shaft type fiber bundle supply device or four-shaft type fiber bundle supply device, the same object and effects according to the present invention can be achieved. The scope of the present invention also encompasses such a modification.

If the fiber bundle F wound around one bobbin B has been unwound and little remains, the fiber bundle supply device 32 starts unwinding of the fiber bundle F wound around the other bobbin B, whereby the fiber bundle F is continuously supplied. The fiber bundle supply device 32 mainly includes the first bobbin holder shaft 321, the second bobbin holder shaft 322, a turntable 323, a first fiber bundle guide 324, and a second fiber bundle guide 325. Here, the bobbin B supported by the first bobbin holder shaft 321 is defined as the first bobbin B1, whereas the bobbin B supported by the second bobbin holder shaft 322 is defined as the second bobbin B2.

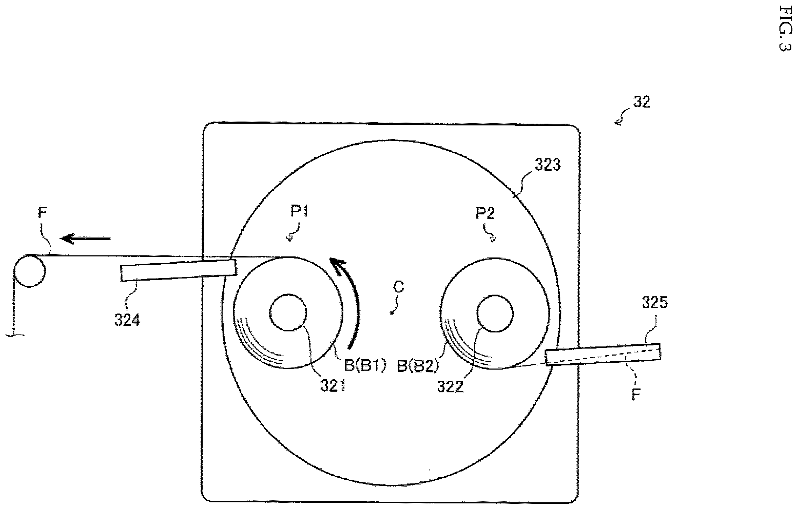

The first bobbin holder shaft 321 rotatably supports the first bobbin B1. When the fiber bundle F is pulled, the first bobbin B1 rotates, whereby the fiber bundle F is unwound. When the first bobbin holder shaft 321 is at an unwinding position P1, the fiber bundle F wound around the first bobbin B1 is unwound (see the black arrows in FIG. 3). And, as explained above, the fiber bundle F unwound from the first bobbin B1 is supplied to the corresponding guide 23 of the helical head 22.

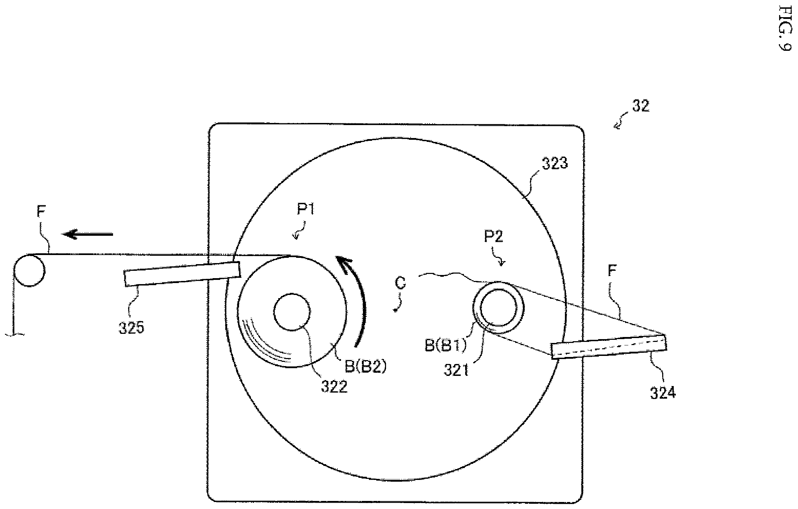

The second bobbin holder shaft 322 rotatably supports the second bobbin B2. When the fiber bundle F is pulled, the second bobbin B2 rotates, whereby the fiber bundle F is unwound. When the second bobbin holder shaft 322 is at the unwinding position P1, the fiber bundle F wound around the second bobbin B2 is unwound (see the black arrows in FIG. 9). And, as explained above, the fiber bundle F unwound from the second bobbin B2 is supplied to the corresponding guide 23 of the helical head 22.

The defined discrimination between the first bobbin holder shaft 321 and the second bobbin holder shaft 322 is made for. the purpose of illustration, and each of these shafts has the same configuration.

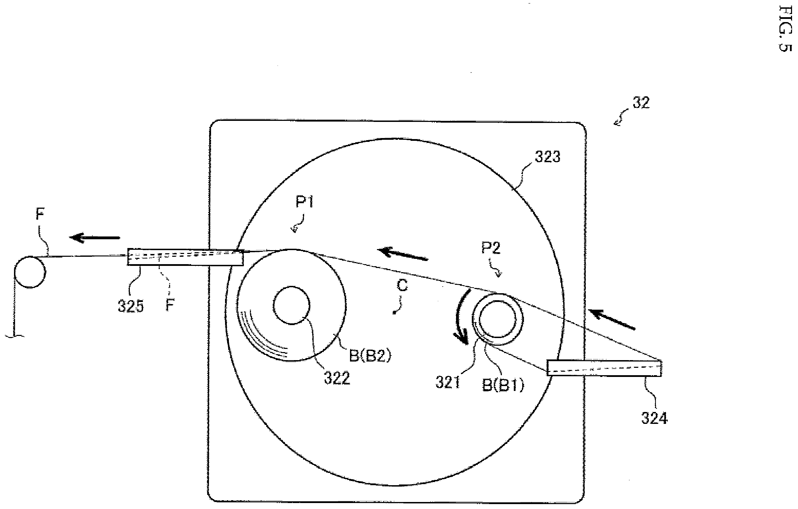

The first bobbin holder shaft 321 and the second bobbin holder shaft 322 are arranged on a concentric circle on the turntable 323, and the turntable 323 rotates around the central axis C of said concentric circle. When the turntable 323 is rotated around the central axis C by about 180°, the position of the first bobbin holder shaft 321 at the unwinding position P1 and the position of the second bobbin holder shaft 322 at a standby position P2 are switched with each other (see FIG. 5). When the second bobbin holder shaft 322 is at the unwinding position P1 and the first bobbin holder shaft 321 is at the standby position P2, the position of the second bobbin holder shaft 322 at the unwinding position P1 and the position of the first bobbin holder shaft 321 at the standby position P2 are exchanged with each other.

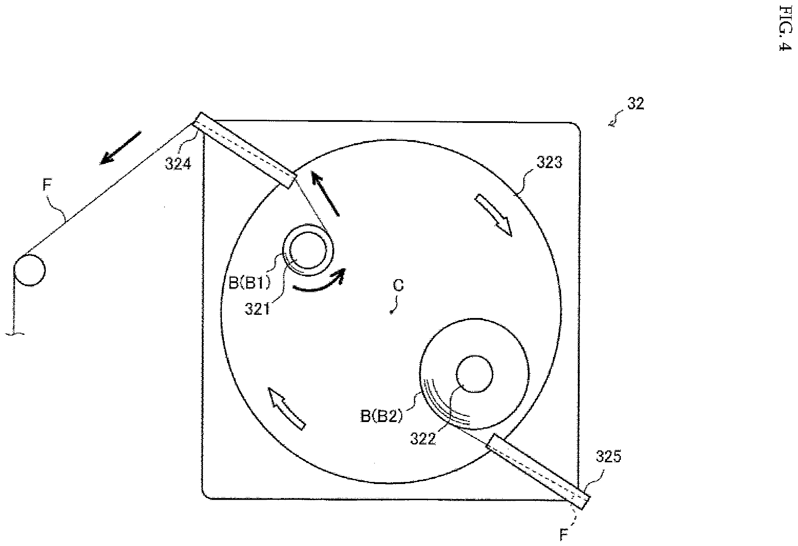

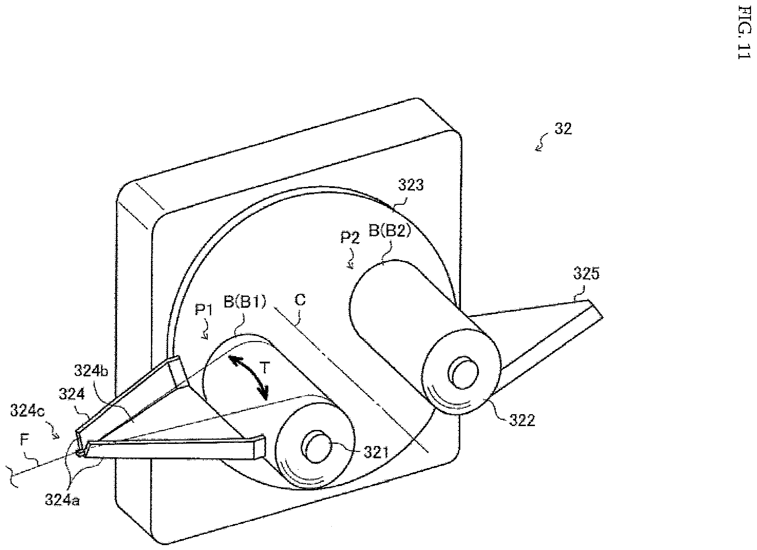

The first fiber bundle guide 324 is installed on the turntable 323 and is rotated with the turntable 323. When the turntable 323 starts rotation, the first fiber bundle guide 324 guides the fiber bundle F unwound from the first bobbin B1 to be restricted in a prescribed trajectory (see FIG. 4, FIG. 11). When the first bobbin holder shaft 321 is at the standby position P2 and the first bobbin holder shaft 321 is exchanged with the second bobbin holder shaft 322 which is at the unwinding position P1, the end portion of the fiber bundle F wound around the first bobbin B1 is superposed on the fiber bundle F unwound from the second bobbin B2. Specific configuration will be explained later.

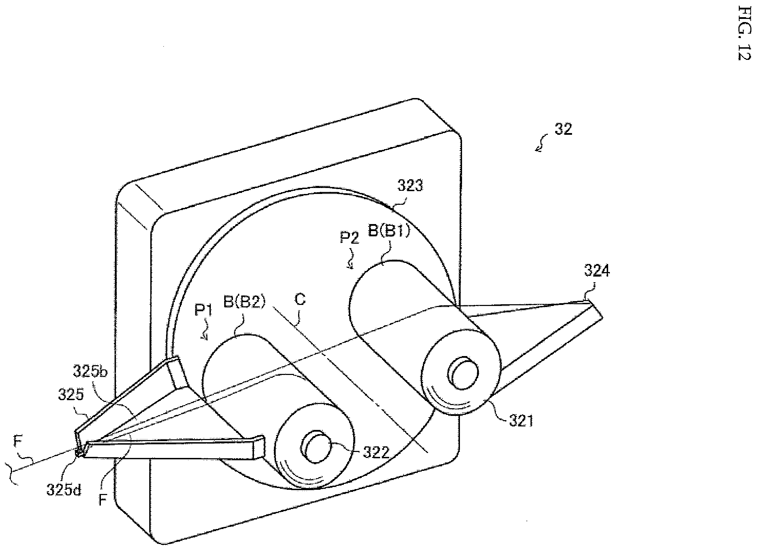

The second fiber bundle guide 325 is installed on the turntable 323 and is rotated with the turntable 323. When the rotation of the turntable 323 is terminated, the second fiber bundle guide 325 superposes the end portion of the fiber bundle F wound around the second bobbin B2 on the fiber bundle F unwound from the first bobbin B1 (see FIG. 5, FIG. 12). When the second bobbin holder shaft 322 is at the unwinding position P1 and the second bobbin holder shaft 322 is switched with the first bobbin holder shaft 321 which is at the standby position P2, the fiber bundle F unwound from the second bobbin B2 is guided to be restricted in the prescribed trajectory. Specific configuration will be explained later.

The defined discrimination between the first fiber bundle guide 324 and the second fiber bundle guide 325 is made for the purpose of illustration, and each of these guides each has the same configuration.

Next, explanation will be given of an operation mode of the fiber bundle supply device 32 at the time of changing a bobbin.

FIG. 3 to FIG. 10 illustrate an example of operation of the fiber bundle supply device 32 at the time of changing a bobbin. The black arrows in the drawings indicate the rotation direction of the first bobbin B1 and the second bobbin B2 and the sending-out direction of the fiber bundle F. The white arrows in the drawings indicate the rotation direction of the turntable 323. Here, explanation will be given by assuming the case in which the first bobbin holder shaft 321 is at the unwinding position P1 and the second bobbin holder shaft 322 is at the standby position P2.

FIG. 3 illustrates a state in which the fiber bundle F wound around the first bobbin B1 is unwound. As shown in FIG. 3, when the fiber bundle F is pulled, the first bobbin B1 rotates, whereby the fiber bundle F is unwound. Since the fiber bundle F is momentarily unwound from the first bobbin B1, the remaining amount of the fiber bundle F wound around the first bobbin B1 gradually decreases. Therefore, the first bobbin B1 has to be changed to the second bobbin B2 before all of the fiber bundle F wound around the first bobbin B1 is unwound and the first bobbin B1 becomes empty.

FIG. 4 illustrates a state in which the turntable 323 starts rotation. As shown in FIG. 4, when the turntable 323 starts rotation, the first fiber bundle guide 324 pushes up the fiber bundle F unwound from the first bobbin B1. At this time, the first fiber bundle guide 324 guides the fiber bundle F unwound from the first bobbin B1 to be restricted in the prescribed trajectory.

Specifically, as shown in FIG. 11, the first fiber bundle guide 324 includes a pair of guide walls 324a which gradually become narrow along the feeding direction of the fiber bundle F. When the fiber bundle F is pushed up, the guide walls 324a lead the fiber bundle F to a bottom wall 324b, Then, the fiber bundle F unwound from the first bobbin B1 is guided by the guide walls 324a and the bottom wall 324b and sent out from a fiber bundle passage 324c which is arranged at an end portion. Thus, the first fiber bundle guide 324 guides the fiber bundle F traversed (see "T" in the drawing) in the shaft direction of the first bobbin B1 to be restricted in the prescribed trajectory.

FIG. 5 illustrates a state in which the rotation of the turntable 323 is terminated. As shown in FIG. 5, when the rotation of the turntable 323 is terminated, the second fiber bundle guide 325 comes in contact with the fiber bundle F unwound from the first bobbin B1. At this time, the second fiber bundle guide 325 superposes the end portion of the fiber bundle F wound around the second bobbin B2 on the fiber bundle F unwound from the first bobbin B1.

Specifically, as shown in FIG. 12, the second fiber bundle guide 325 includes a holder 325d which holds the tip end portion of the fiber bundle F. The holder 325d retains the fiber bundle F wound around the second bobbin B2 in such a state to run along a bottom wall 325b. Then, by rotating the turntable 323, the fiber bundle F wound around the second bobbin B2 is guided in such a state to run along the fiber bundle F unwound from the first bobbin B1. As such, the second fiber bundle guide 325 superposes the end portion of the fiber bundle F wound around the second bobbin B2 on the fiber bundle F unwound from the first bobbin B1.

Because of this configuration, it is possible that the end portion of the fiber bundle F wound around the second bobbin B2 is overlapped with the fiber bundle F unwound from the first bobbin B1 and restricted in the prescribed trajectory by the present fiber bundle supply device 32. As such, the fiber bundle F of the first bobbin B1 can be spliced with the fiber bundle F of the second bobbin B2.

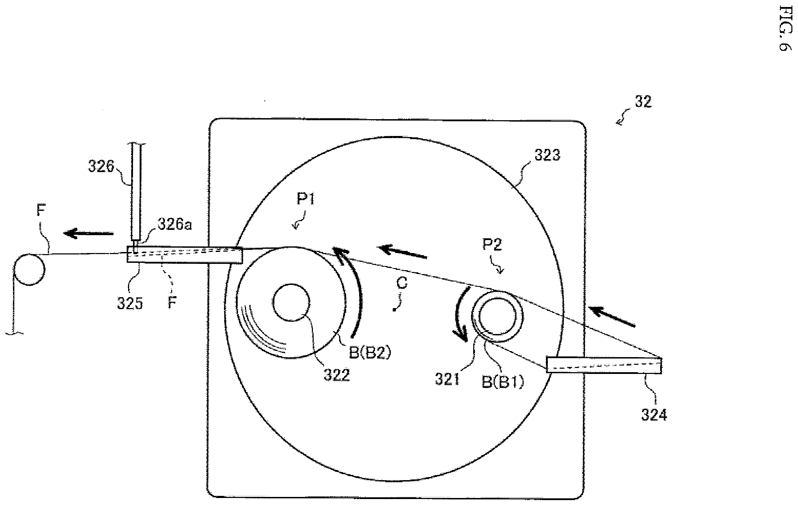

FIG. 6 illustrates a state where overlapped portions of the fiber bundle F are spliced by a splicing device 326. As shown in FIG. 6, with respect to the splicing device 326, the overlapped portion of the fiber bundle F is nipped and held by the splicing device 326 and the second fiber bundle guide 325. Then the splicing device 326 applies heat to the overlapped portion of the fiber bundles F, whereby these fiber bundles F are spliced.

Specifically, the splicing device 326 includes a heater part 326a which becomes hot due to a flow of electric current. The heater part 326a applies heat to the overlapped portion of the fiber bundles F, whereby each of the fiber bundles F are thermally-cured and spliced. As such, the fiber bundle F of the first bobbin B1 can be surely spliced with the fiber bundle F of the second bobbin B2 by the splicing device 326 with a simple configuration.

As other component, the overlapped portion of the fiber bundles F may be depressed and spliced by the splicing device 326. Moreover, the overlapped portion of the fiber bundles F may be stitched up and spliced by the splicing device 326. As such, the fiber bundle F of the first bobbin B1 can be surely spliced with the fiber bundle F of the second bobbin B2 by the splicing device 326 with a simple configuration. Also, each of the fiber bundles F may be spliced by using other methods such as confounding etc.

Because of this configuration, it is possible that the overlapped portion of the fiber bundle F of the first bobbin B1 and the fiber bundle F of the second bobbin B2 are spliced by the fiber bundle supply device 32. Accordingly, the fiber bundle F of the first bobbin B1 can be surely spliced with the fiber bundle F of the second bobbin B2.

Furthermore, the fiber bundle supply device 32 sends out the fiber bundle F while splicing the fiber bundle F of the first bobbin B1 and the fiber bundle F of the second bobbin B2. This makes it possible to easily change the length of the splicing portion and the splicing pattern. As such, it is also possible to secure the flexibility of the splicing portion by intermittently splicing the overlapped portion of the fiber bundle F.

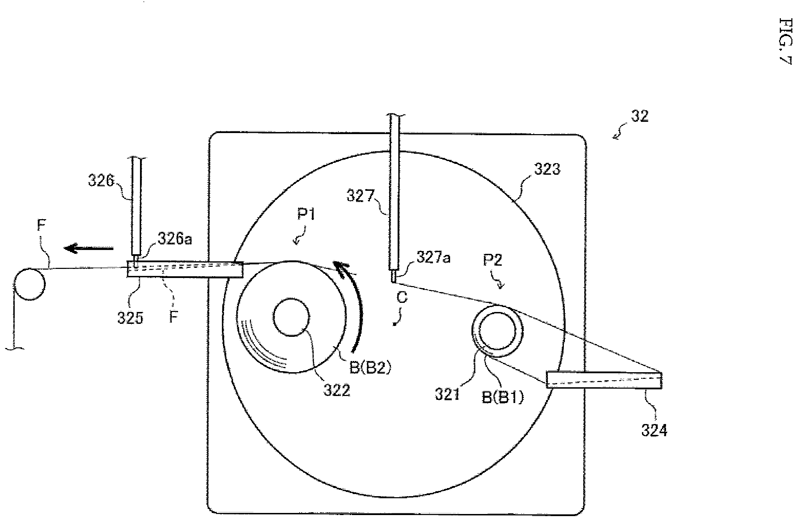

FIG. 7 illustrates a state where the fiber bundle F unwound from the first bobbin B1 is cut by a cutter device 327. As shown in FIG. 7, the cutter device 327 divides the fiber bundle F unwound from the first bobbin B1 between the first bobbin B1 and the second bobbin B2.

Specifically, the cutter device 327 includes a cutter 327a which cuts the fiber bundle F. The fiber bundle F unwound from the first bobbin B1 spanned between the first bobbin B1 and the second bobbin B2 is divided by the cutter 327a. The time that the fiber bundle F is cut is determined based on the bonding strength required for the splicing portion. That is to say, the fiber bundle F is cut by the cutter device 327 such that the fiber bundle F would not separate even when the tensile load is applied to the fiber bundle F when all of the overlapped portion of the fiber bundle F is spliced, and prevent the length of the splicing portion from being longer than necessary.

Because of this configuration, it is possible that necessary and sufficient bonding strength is secured with respect to the splicing portion of the fiber bundle F of the first bobbin B1 and the fiber bundle F of the second bobbin B2 by the fiber bundle supply device 32. Accordingly, required bonding strength can be secured for the splicing portion, and time required for splicing can be shortened.

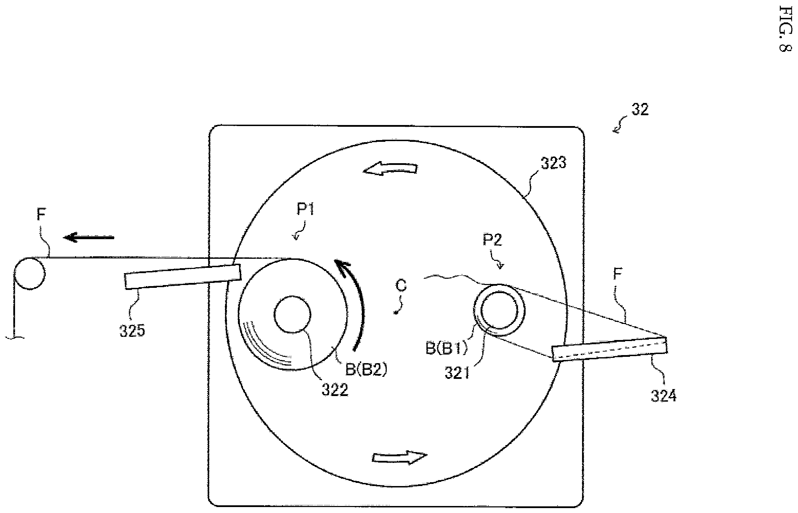

FIG. 8 illustrates a state where rotation of the turntable 323 to the reverse direction is terminated. As shown in FIG. 8, the second fiber bundle guide 325 is rotated to the reverse direction with the turntable 323, whereby the second fiber bundle guide 325 is separated from the fiber bundle F of the second bobbin B2.

FIG. 9 illustrates a state where the fiber bundle F wound around the second bobbin B2 is unwound. As shown in FIG. 9, when the fiber bundle F is pulled, the second bobbin B2 rotates, whereby the fiber bundle F is unwound. Since the fiber bundle F is momentarily unwound from the second bobbin B2, the remaining amount of the fiber bundle F wound around the second bobbin B2, gradually decreases. Therefore, the second bobbin B2 has to be changed to the first bobbin B1 by fitting a new bobbin B (first bobbin B1) to the first bobbin holder shaft 321 before all of the fiber bundle F wound around the second bobbin B2 is unwound and the second bobbin B2 becomes an empty bobbin.

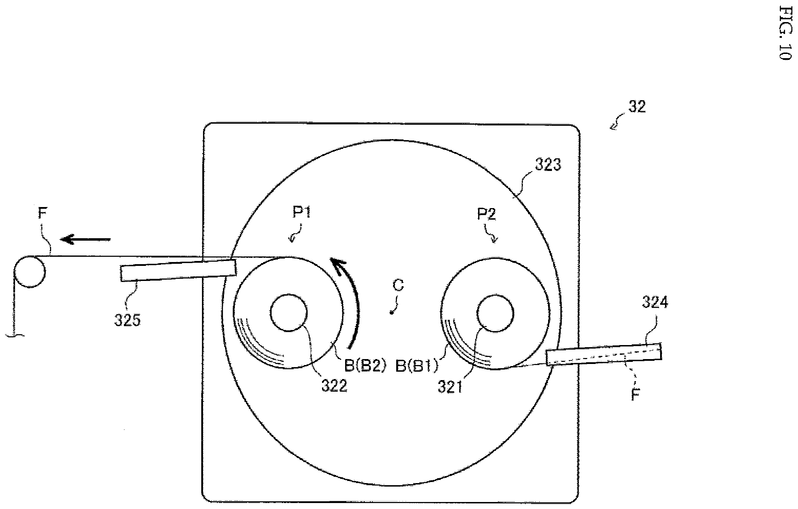

FIG. 10 illustrates a state where a new bobbin B (first bobbin B1) is fitted to the first bobbin holder shaft 321. As shown in FIG. 10, by fitting the new bobbin B (first bobbin B1) to the first bobbin holder shaft 321, the bobbin B (first bobbin B1) can be kept at a standby. As such, if the fiber bundle F wound around the second bobbin B2 has been unwound and little remains, unwinding of the fiber bundle F wound around the new bobbin B (first bobbin B1) is started, whereby the fiber bundle F is continuously supplied.

As described above, with respect to the fiber bundle supply device 32 according to the embodiment of the present invention, if the fiber bundle F wound around the first bobbin B1 has been unwound and little remains, unwinding of the fiber bundle F wound around the second bobbin B2 is started, whereby the fiber bundle F is continuously supplied. And if the fiber bundle F wound around the second bobbin B2 has been unwound and little remains, unwinding of the fiber bundle F wound around the first bobbin B1 is started, whereby the fiber bundle F is continuously supplied. As such, the fiber bundle F can be continuously supplied.

### INDUSTRIAL APPLICABILITY

The present invention can be utilized to a technique of a fiber bundle supply device.

## Claims

1. A fiber bundle supply device (32) comprising:
plural bobbin holder shafts (321, 322) each of which supports a bobbin (B) around which a fiber bundle (F) is wound; and
a turntable (323) on which the bobbin holder shafts (321, 322) are arranged in a concentric pattern and which rotates around a central axis (C) of said concentric pattern,
**characterized by** comprising a first fiber bundle guide (324) and a second fiber bundle guide (325) which are installed on the turntable (323) and which rotate with the turntable (323), wherein
the bobbin holder shafts (321, 322) are configured from at least a first bobbin holder shaft (321) which supports a first bobbin (B1), and a second bobbin holder shaft (322) which supports a second bobbin (B2),
wherein if the fiber bundle (F) wound around the first bobbin (B1) has been unwound and little remains, the turntable is rotated, thereby the first fiber bundle guide (324) pushing up the fiber bundle (F) unwound from the first bobbin (B1) and guiding the fiber bundle (F) to be restricted in the prescribed trajectory, and when the rotation of the turntable (323) is terminated, the second fiber bundle guide (325) superposing the end portion of the fiber bundle (F) wound around the second bobbin (B2) on the fiber bundle (F) unwound from the first bobbin (B 1), and
the fiber bundle (F) of the first bobbin (B1) and the fiber bundle (F) of the second bobbin (B2) are spliced, thereby
unwinding of the fiber bundle (F) wound around the second bobbin (B2) is started.

2. The fiber bundle supply device (32) according to Claim 1 **characterized in** comprising a splicing device (326) which splices the fiber bundle (F) of the first bobbin (B1) and the fiber bundle (F) of the second bobbin (B2) together, wherein
the splicing device (326) splices a overlapped portion of the fiber bundle (F) of the first bobbin and the fiber bundle of the second bobbin nipped and held by the splicing device (326) and the second fiber bundle guide (325).

3. The fiber bundle supply device (32) according to Claim 1 or Claim 2, **characterized by** comprising a cutter device (327) which cuts the fiber bundle (F) unwound from the first bobbin (B1), wherein
the cutter device (327) cuts the fiber bundle (F) unwound from the first bobbin (B1) such that necessary and sufficient bonding strength is obtained when all of the overlapped portion of the fiber bundle (F) is spliced.

## Patentansprüche

1. Faserbündelzuführvorrichtung (32), welche aufweist:
eine Mehrzahl von Spulenhalterwellen (321, 322), deren jede eine Spule (B) trägt, um die ein Faserbündel (F) gewickelt ist; und
einen Drehteller (323), auf dem die Spulenhalterwellen (321, 322) zu einem konzentrischen Muster angeordnet sind und der sich um eine Mittelachse (C) des konzentrischen Musters herum dreht,
**dadurch gekennzeichnet, dass** sie eine erste Faserbündelführung (324) und eine zweite Faserbündelführung (325) aufweist, die an dem Drehteller (323) angebracht sind und die sich mit dem Drehteller (323) drehen, wobei
die Spulenhalterwellen (321, 322) aus zumindest einer ersten Spulenhalterwelle (321), die eine erste Spule (B1) trägt, und einer zweiten Spulenhalterwelle (322), die eine zweite Spule (B2) trägt, konfiguriert sind,
wobei, wenn das Faserbündel (F), das um die erste Spule (B1) gewickelt ist, abgewickelt worden ist und etwas verbleibt, der Drehteller gedreht wird, wodurch die erste Faserbündelführung (324) das von der ersten Spule (B1) abgewickelte Faserbündel (F) hochdrückt und das Faserbündel (F) in einer vorbestimmten Bahn begrenzt führt, und wenn die Drehung des Drehtellers (323) beendet ist, die zweite Faserbündelführung (325) den Endabschnitt für des um die zweite Spule (B2) herumgewickelten Faserbündels (F) auf das von der ersten Spule (B1) abgewickelte Faserbündel (F) auflagert, und
das Faserbündel (F) der ersten Spule (B1) und das Faserbündel (B2) der zweiten Spule (B2) gespleißt werden, wodurch das Abwickeln des um die zweite Spule (B2) herumgewickelten Faserbündels (F) gestartet wird.

2. Die Faserbündelzuführvorrichtung (32) nach Anspruch 1, **dadurch gekennzeichnet, dass** sie eine Spleißvorrichtung (326) aufweist, die das Faserbündel (F) der ersten Spule (B1) und das Faserbündel (F) der zweiten Spule (B2) miteinander verspleißt, wobei
die Spleißvorrichtung (326) einen überlappten Abschnitt des Faserbündels (F) der ersten Spule und des Faserbündels (F) der zweiten Spule, das von der Spleißvorrichtung (326) und der zweiten Faserbündelführung (325) ergriffen und gehalten wird, verspleißt.

3. Die Faserbündelzuführvorrichtung (32) nach Anspruch 1 oder Anspruch 2, **dadurch gekennzeichnet, dass** sie eine Schneidvorrichtung (327) aufweist, die das von der ersten Spule (B1) abgewickelte erste Faserbündel (F) schneidet, wobei
die Schneidvorrichtung (327) das von der ersten Spule (B1) abgewickelte Faserbündel (F) so schneidet, dass eine erforderliche und ausreichende Verbindungsfestigkeit erhalten wird, wenn der überlappte Abschnitt des Faserbündels (F) insgesamt verspleißt ist.

## Revendications

1. Dispositif d'approvisionnement en faisceau de fibres (32), comprenant:
plusieurs tiges de support de bobine (321, 322) dont chacune supporte une bobine (B) autour de laquelle un faisceau de fibres (F) est enroulée; et
une plaque tournante (323) sur laquelle les tiges de support de bobine (321, 322) sont arrangées d'une manière concentrique et qui tourne autour d'un axe centrale (C) du modèle concentrique,
**caractérisé en ce que** le dispositif comprend un premier guide de faisceau de fibres (324) et un deuxième guide de faisceau de fibres (325) qui sont montés sur la plaque tournante (323) et qui tournent avec la plaque tournante (323), où
les tiges de support de bobine (321, 322) sont configurées d'au moins une première tige de support de bobine (321) qui supporte une première bobine (B1) et une deuxième tige de support de bobine (322) qui supporte une deuxième bobine (B2),
où
quand le faisceau de fibres (F) enroulé autour de la première bobine (B1) a été déroulé et quand il n'en reste qu'un petit bout, la plaque tournante est tournée, donc le premier guide de faisceau de fibres (324) pousse vers le haut le faisceau de fibres (F) déroulé de la première bobine (B1) et guide le faisceau de fibres (F) pour être restreint dans le trajectoire prescrit, et quand la rotation de la plaque tournante (323) est terminée, le deuxième guide de faisceau de fibres (325) superpose la portion terminale du faisceau de fibres (F) enroulé autour de la deuxième bobine (B2) sur le faisceau de fibres (F) déroulé de la première bobine (B1), et
le faisceau de fibres (F) de la première bobine (B1) et le faisceau de fibres (F) de la deuxième bobine (B2) sont épissés, donc
un déroulement du faisceau de fibres (F) enroulé autour de la deuxième bobine (B2) est déclenché.

2. Dispositif d'approvisionnement en faisceau de fibres (32) selon la revendication 1, **caractérisé en ce que** le dispositif comprend un dispositif d'épissure (326) qui épisse le faisceau de fibres (F) de la première bobine (B1) et le faisceau de fibres (F) de la deuxième bobine (B2) ensemble, où le dispositif d'épissure (326) épisse une partie de chevauchement du faisceau de fibres (F) de la première bobine et le faisceau de fibres de la deuxième bobine pincée et supportée par le dispositif d'épissure (326) et le deuxième guide de faisceau de fibres (325).

3. Dispositif d'approvisionnement en faisceau de fibres (32) selon la revendication 1 ou la revendication 2, **caractérisé en ce que** le dispositif comprend un dispositif de découpe (327) qui découpe le faisceau de fibres (F) déroulé de la première bobine (B1), où
le dispositif de découpe (327) découpe le faisceau de fibres (F) déroulé de la première bobine (B1) de sorte qu'une force adhésive nécessaire et suffisante est réalisée quand la partie de chevauchement entière du faisceau de fibres (F) est épissée.
